# EUROPÄISCHE PATENTSCHRIFT

(11) **EP 3 903 572 B1**
(45) Veröffentlichungstag und Bekanntmachung des Hinweises auf die Patenterteilung: **05.06.2024**
(21) Anmeldenummer: 21168101.0
(22) Anmeldetag: 13.04.2021
(51) Int. Cl.: A01G 27/00

(54) **PFLANZENKULTIVIERUNGSSYSTEM UND VERFAHREN ZUM BETREIBEN EINES PFLANZENKULTIVIERUNGSSYSTEMS**
PLANT CULTIVATION SYSTEM AND METHOD FOR OPERATING SAME
SYSTÈME DE CULTURE DE PLANTES ET PROCÉDÉ DE FONCTIONNEMENT D'UN SYSTÈME DE CULTURE DE PLANTES

(30) Priorität: 27.04.2020 DE 102020205323
(43) Veröffentlichungstag der Anmeldung: 03.11.2021
(73) Patentinhaber: BSH Hausgeräte GmbH, 81739 München (DE)
(72) Erfinder: Longhino, Werner, 84561 Mehring (DE); Mudra, Thomas, 84556 Kastl (DE); Blatnik, Gregor, 2381 Podgorje (SI); Dornik, Primoz, 3270 Lasko (SI); Holcinger, Tadej, 3220 Store (SI); Leng, Sascha, 80339 München (DE); Pacnik, Roman, 2383 Smartno pri Slovenj Gradcu (SI); Schaufler, Stephan, 83334 Inzell (DE); Haitzer, Simon, 83355 Grabenstätt (DE); Daxenberger, Florian, 83257 Gstadt (DE)

(56) Entgegenhaltungen:
- CN-A- 106 613 794
- CN-A- 107 197 705
- CN-A- 108 739 307
- CN-B- 104 823 816
- US-A1- 2009 293 354

## Beschreibung

Die vorliegende Erfindung betrifft ein Pflanzenkultivierungssystem zur Kultivierung von Pflanzen. Darüber hinaus betrifft die vorliegende Erfindung ein Verfahren zum Betreiben eines Pflanzenkultivierungssystems.

Die Kultivierung von Pflanzen in Innenräumen ist zum gewerblichen Anbau verbreitet, erfreut sich aber auch in Wohnbereichen zur Zierde, zur Schaffung eines gewünschten Raumklimas und/oder zur Nutzung der Pflanzen beispielsweise zur Gewinnung von Gewürzen oder sonstigen Zutaten zum Kochen oder Backen großer Beliebtheit. Die jeweiligen Pflanzen können dabei insbesondere in Erde oder als Hydrokultur in einem Substrat wurzeln; derartige Substrate, die bei der Hydrokultur in wassergefüllten Behältern angeordnet sind, können beispielsweise Tongranulate oder und/Steinwolle enthalten. In speziellen Anwendungen derartiger Hydrokultur werden hydroponische Pflanzsysteme eingesetzt, bei denen verschiedene die Entwicklung einer jeweiligen Pflanze beeinflussende Parameter automatisch überwacht und geregelt werden können.

Bei bekannten Pflanzenkultivierungssystemen wachsen die Pflanzen jeweils in einer Pflanzschale, die in ein Bewässerungsgefäß mit Wasser eingesetzt oder einzusetzen ist. Das Bewässerungsgefäß ist mindestens teilweise auf einem Sockelelement des Pflanzenkultivierungssystems angeordnet. Eine Pumpeinheit ist dabei dazu eingerichtet, Wasser aus dem Bewässerungsgefäß in die Pflanzschale zu pumpen und so automatisch die Versorgung der Pflanzen zu gewährleisten.

US 2009/293354 A1 offenbart eine automatische Pflanzenbewässerungsvorrichtung mit einem Hohlraum zur Aufnahme eines Standard-Zimmerpflanzentopfes, einem Reservoir zum Halten von Wasser, einer Pumpe zum Pumpen von Wasser aus dem Reservoir, einem Wirt zum Fördern von Wasser von der Pumpe zu einer in dem Hohlraum positionierten Pflanze. Die Pumpe wird von einem Mikrocontroller betrieben, der programmiert ist, um einen ersten Zeitraum zu messen, in dem die Pumpe nicht betrieben wird, und einen zweiten Zeitraum, in dem die Pumpe betrieben wird. Die Vorrichtung ist programmierbar, um eine Hausanlage in vorbestimmten Intervallen automatisch zu bewässern und eine vorbestimmte Wassermenge zu liefern.

Zur Vereinfachung von Pflege und Ernte der Pflanzen ist es dabei vorteilhaft, wenn das Bewässerungsgefäß von dem Sockelelement abnehmbar ist.

Der vorliegenden Erfindung liegt die Aufgabe zugrunde, eine verbesserte Technik für eine Kultivierung von Pflanzen in Innenräumen bereitzustellen.

Die Aufgabe wird gelöst durch ein Pflanzenkultivierungssystem gemäß Anspruch 1 und ein Verfahren nach Anspruch 7. Vorteilhafte Ausführungsformen sind in den Unteransprüchen, der Beschreibung und den Figuren offenbart.

Ein erfindungsgemäßes Pflanzenkultivierungssystem dient einer Pflanzenkultivierung in einem Innenraum. Es umfasst wenigstens ein Sockelelement sowie ein Bewässerungsgefäß zur Aufnahme von Wasser und mindestens einer Pflanzschale. Das Bewässerungsgefäß ist abnehmbar auf dem Sockelelement angeordnet oder anzuordnen (je nach aktuellem Zustand). Darüber hinaus umfasst ein erfindungsgemäßes Pflanzenkultivierungssystem wenigstens eine Pumpeinheit mit einem Pumpelement, das dazu eingerichtet ist, eine Pumpbewegung auszuführen und so Wasser aus dem Bewässerungsgefäß in die wenigstens eine Pflanzschale zu pumpen (wenn diese im Bewässerungsgefäß angeordnet ist), sowie mit einer Antriebseinheit für das Pumpelement; die Antriebseinheit ist also dazu eingerichtet, das Pumpelement zu dessen Pumpbewegung anzutreiben. Die Antriebseinheit umfasst mindestens eine an einen Stromkreis anschließbare Spule und das Pumpelement mindestens eine Pumpmembran und/oder die Antriebseinheit umfasst mindestens einen bewegbaren Magneten und das Pumpelement mindestens eine Pumpmembran. Am Pumpmembran ist ein Magnet oder ferromagnetisches Material befestigt. Dabei erfolgt der Antrieb unter Ausnutzung von Magnetkraft.

Ein erfindungsgemäßes Verfahren dient zum Betreiben eines Pflanzenkultivierungssystems, insbesondere eines erfindungsgemäßen Pflanzenkultivierungssystems gemäß einer der in dieser Schrift offenbarten Ausführungsformen. Dabei wird mittels einer Pumpeinheit Wasser aus einem Bewässerungsgefäß in eine Pflanzschale gepumpt. Die Pumpeinheit umfasst dabei eine Antriebseinheit sowie ein mittels Magnetkraft durch die Antriebseinheit anzutreibendes Pumpelement. Die Antriebseinheit umfasst mindestens eine an einen Stromkreis anschließbare Spule und das Pumpelement mindestens eine Pumpmembran und/oder die Antriebseinheit umfasst mindestens einen bewegbaren Magneten und das Pumpelement mindestens eine Pumpmembran. Am Pumpmembran ist ein Magnet oder ferromagnetisches Material befestigt.

Durch die Ausnutzung der Magnetkraft zum Antreiben des Pumpelements und damit zur Kraftübertragung auf das Pumpelement kann das Pumpelement kabel- und sogar kontaktlos zur Ausführung einer Pumpbewegung angetrieben werden; insbesondere sind die Antriebseinheit und das Pumpelement vorzugsweise (auch) in einem Betriebszustand der Pumpeinheit elektrisch voneinander getrennt (also elektrisch gegeneinander isoliert). Auf diese Weise kann auf Elektronik im Wasserkreislauf verzichtet werden, und das Bewässerungsgefäß kann mitsamt des enthaltenen Pumpelements spülmaschinenfest ausgebildet sein. Ein Anwender braucht damit für eine Reinigung des Bewässerungsgefäßes nicht erst Teile der Pumpeinheit zu entfernen, was eine vereinfachte und besonders bequeme Pflege des Pflanzenkultivierungssystems bedeutet.

Gemäß vorteilhaften Ausführungsformen der vorliegenden Erfindung ist das Pumpelement mindestens teilweise im Inneren des Bewässerungsgefäßes angeordnet. Die Antriebseinheit ist vorzugsweise mindestens teilweise oder vollständig außerhalb des Bewässerungsgefäßes bzw. separat von dieser angeordnet; insbesondere kann es an oder in dem Sockelelement positioniert sein: Die Trennung der Antriebseinheit vom Bewässerungsgefäß ermöglicht bei derartigen Ausführungsformen insbesondere, dass bei einem Abnehmen bzw. Aufsetzen des Bewässerungsgefäßes auf das bzw. von dem Sockelelement keine elektrischen Steckerverbindungen gelöst bzw. hergestellt werden müssen.

Die Antriebseinheit kann beispielsweise mindestens teilweise im oder am Sockelelement angeordnet sein, das seinerseits bevorzugtermaßen mit einer elektrischen Stromquelle verbunden oder zu verbinden ist.

Das Sockelelement dient vorzugsweise als Fuß des Pflanzenkultivierungssystems. Es kann als eine Unterschale ausgebildet sein, also eine Vertiefung aufweisen; in diesem Fall bedeutet ein Aufsetzen des Bewässerungsgefäßes auf das Sockelelement vorzugsweise ein Anordnen des Bewässerungsgefäßes mindestens teilweise in der Vertiefung. So können beispielsweise Wassertropfen, die beim Auffüllen des Bewässerungsgefäßes an dessen äußere Oberfläche geraten sein können, von der Unterschale aufgefangen werden.

Das Pumpelement umfasst eine Pumpmembran sowie einen Magneten und/oder ein ferromagnetisches Material, der/das direkt oder über mindestens ein Verbindungselement (z.B. einen ggf. von der Pumpeinheit umfassten Hebel) mit der Pumpmembran verbunden sein kann.

Die Antriebseinheit kann dann eine an einen Stromkreis anschließbare Spule (und damit einen Elektromagneten) umfassen. Die für das Pumpen erforderliche Auslenkung der Pumpmembran kann dann bei Ausführungsformen, bei denen das Pumpelement wie erwähnt einen Magneten umfasst, durch (von der jeweiligen Stromrichtung abhängige) Abstoßung oder Anziehung des Magneten durch die Spule bewirkt werden; bei Ausführungsformen mit ferromagnetischem Material kann die Pumpeinheit dazu eingerichtet sein, eine Anziehung durch einen Stromfluss in der Spule zu bewirken und eine jeweilige Rückstellung der Membran durch ein dann vorzugsweise ebenfalls von der Pumpeinheit umfasstes Federelement oder durch eine Elastizität der Pumpmembran.

Alternativ oder zusätzlich zu einer an einen Stromkreis anschließbaren Spule kann die Antriebseinheit für ein Pumpelement der genannten Art (mit Pumpmembran und Magnet oder ferromagnetischem Material) einen bewegbaren Dauermagneten umfassen: Die Antriebseinheit kann dann dazu eingerichtet sein, eine Auslenkung der Pumpmembran durch eine lineare oder rotatorische Bewegung des Dauermagneten zu bewirken. Zum Bewegen des Dauermagneten kann die Antriebseinheit einen Elektromotor umfassen.

Gemäß vorteilhaften Ausführungsformen umfasst die Antriebseinheit ein Element zur Erzeugung eines magnetischen Drehfelds, wie beispielsweise einen Motor, der einen Permanent- oder Elektromagneten rotatorisch antreibt, und/oder eine elektrische Schaltung mit einer oder mehreren Spulen, die durch entsprechende Bestromung der Spule/n ein rotierendes Magnetfeld erzeugt. Das Pumpelement umfasst vorzugsweise mindestens ein rotierbares Pumpenrad, das dann mittels einer Magnetkupplung durch die Antriebseinheit anzutreiben ist. Die Magnetkupplung ermöglicht bei derartigen Ausführungsformen somit jeweils eine einfache Trennung von Pumpenrad und Antriebseinheit bei einem Abnehmen des Bewässerungsgefäßes vom Sockelelement und umgekehrt eine einfache Verbindung von Pumpenrad und Antriebseinheit bei einem Aufsetzen des Bewässerungsgefäßes auf das Sockelelement, und zwar unter Vermeidung dynamischer Dichtungen. Insbesondere kann das Ab- bzw. Ankuppeln des Pumpenrades vom bzw. an die Antriebseinheit vorzugsweise automatisch (ausschließlich) durch das Abnehmen bzw. Aufsetzen des Bewässerungsgefäßes vom bzw. auf das Sockelelement erfolgen. Gegenüber herkömmlichen Pflanzenkultivierungssystemen bedeutet dies eine erhebliche Vereinfachung in Handhabung und Wartung des Pflanzenkultivierungssystems.

Die Magnetkupplung ist bei solchen Ausführungsvarianten vorzugsweise als eine berührungslose Magnetkupplung ausgebildet, deren Antriebsseite im aufgesetzten Zustand des Bewässerungsgefäßes von ihrer Abtriebsseite (zumindest) durch eine Wandung und/oder einen Boden des Bewässerungsgefäßes getrennt ist. Eine Drehmomentübertragung vom Motor auf die Pumpe kann damit durch die Wandung bzw. den Boden des Bewässerungsgefäßes hindurch erfolgen.

Zur Herstellung eines Magnetfeldes und damit zur Bereitstellung ihrer Funktion kann die Magnetkupplung bei derartigen Ausführungsformen mindestens einen Elektromagneten und/oder eine elektrische Schaltung zur Drehfelderzeugung und/oder mindestens einen Dauermagneten umfassen. In Ausführungsformen mit mindestens einem Elektromagneten ist dieser vorzugsweise motorseitig angeordnet. Der Elektromagnet kann dabei dieselbe Stromversorgung (z.B. in Form eines Anschlusssteckers an ein Stromnetz) aufweisen wie der vorzugsweise als Elektromotor ausgebildete Motor.

Insbesondere kann die Pumpeinheit als eine Magnetkupplungspumpe mit mindestens zwei Dauermagneten ausgebildet sein, auf deren Anziehungs- bzw. Abstoßungskräften sie beruhen kann.

Ein erfindungsgemäßes Pflanzenkultivierungssystem kann vorzugsweise als ein Haushaltsgerät, also für eine (nicht-kommerzielle) Kleinanwendung im Wohnbereich konzipiert sein; die Pflanzschale kann beispielsweise eine Anzuchtfläche von maximal 1000 cm², maximal 600 cm² oder maximal 300 cm² bereitstellen. Das Bewässerungsgefäß kann insbesondere ein Aufnahmevolumen (für Pflanzschale und Wasser) von nicht mehr als 10 Litern, nicht mehr als 6 Litern, nicht mehr als 3 Litern oder sogar nicht mehr als 1 Liter haben.

Die Pflanzschale dient vorzugsweise insbesondere als Aufnahme- und Stabilisierungsgefäß für Saat- und/oder Pflanzgut bei der Kultivierung. Sie kann einen oder mehrere Kapselhalter jeweils zur Aufnahme einer jeweiligen Kapsel mit Pflanzenzuchtsubstrat umfassen.

Das Wasser kann jeweils vorzugsweise mit Zusatzstoffen wie insbesondere Nährstoffen bzw. Dünger und/oder Sauerstoff angereichert sein.

Insbesondere kann ein erfindungsgemäßes Pflanzenkultivierungssystem bzw. ein in einem erfindungsgemäßen Verfahren eingesetztes Pflanzenkultivierungssystem vorzugsweise als ein hydroponisches Pflanzenkultivierungssystem ausgebildet sein.

Vorzugsweise umfasst ein erfindungsgemäßes Pflanzenkultivierungssystem mindestens eine Lampe zur Beleuchtung einer oder mehrerer im Pflanzschale kultivierten/r Pflanze/n. Das Pflanzenkultivierungssystem kann damit unabhängig von natürlichen Beleuchtungsbedingungen eingesetzt werden.

Gemäß vorteilhaften Ausführungsformen umfasst ein erfindungsgemäßes Pflanzenkultivierungssystem zudem eine Regelungseinheit mit einer Sensoreinrichtung. Die Regelungseinheit ist dabei vorzugsweise dazu eingerichtet, (bevorzugt automatisch oder teilautomatisch (d.h. unter Einbeziehung mindestens einer Anwenderaktion)) eine Aktivität der Antriebseinheit auf Grundlage wenigstens eines durch die Sensoreinrichtung erfassten Messwertes zu regeln. Insbesondere kann die Sensoreinrichtung dazu eingerichtet sein, jeweilige Messwerte in regelmäßigen Zeitabständen und/oder auf eine Anwenderabfrage hin zu erfassen.

Ein erfindungsgemäßes Verfahren kann analog ein (beispielsweise regelmäßiges und/oder auf eine Anwenderabfrage hin erfolgendes) Erfassen wenigstens eines Messwertes mittels einer Sensoreinrichtung sowie ein (vorzugsweise automatisches oder teilautomatisches) Regeln einer Aktivität der Antriebseinheit auf Grundlage des wenigstens einen erfassten Messwertes umfassen.

So wird eine Kontrolle der Funktion der Pumpeinheit sowie eine Reaktion auf eine ggf. vorliegende Fehlleistung, die sich im wenigstens einen Messwert widerspiegelt, ermöglicht.

Beispielsweise kann die Sensoreinrichtung mindestens einen Aufsetzzustandssensor umfassen, mit dem erkannt werden kann, ob das Bewässerungsgefäß bestimmungsgemäß auf das Sockelelement aufgesetzt ist (oder nicht), und/oder mindestens einen Füllzustandssensor zur Messung eines jeweils aktuellen Füllstandes im Bewässerungsgefäß oder zumindest zur Erkennung, ob ein jeweils aktueller Füllstand innerhalb eines vorgesehenen Bereichs liegt; der Füllzustandssensor kann beispielsweise einen Magnetschwimmer und einen Reedschalter umfassen.

In Ausführungsformen, bei denen die Antriebseinheit wie oben erwähnt einen Motor (je nach Ausführungsvariante zum Bewegen eines bewegbaren Dauermagneten und/oder zum Rotieren eines Pumpenrades; insbesondere einen Elektromotor) aufweist, kann die Sensoreinrichtung mindestens einen Motorstromsensor (z.B. einen Nebenwiderstand (Shunt)) zum Erfassen eines jeweils aktuellen Motorstroms und/oder mindestens einen Motordrehzahlmesser zum Erfassen einer jeweils aktuellen Motordrehzahl umfassen. Damit kann jeweils erkannt werden, ob die Pumpeinheit bei einem Start wie vorgesehen anläuft, ob sie blockiert, oder ob ihre Magnetkupplung (sofern vorhanden) unzureichend greift.

Insbesondere der (von der jeweiligen Last abhängige) Motorstrom gibt Auskunft darüber, ob die Magnetkupplung ordnungsgemäß funktioniert. Bei einem Funktionsausfall der Pumpeinheit infolge einer Blockade oder einer mangelhaften Leistung der Magnetkupplung fällt beispielsweise der Motorstrom ab und kann insbesondere dem Leerlaufstrom des Motors entsprechen.

Auch ein Anstieg der Motordrehzahl weist, zumindest wenn (beispielsweise mittels eines Füllzustandssensors wie oben genannt) ein auf fehlendem Wasser beruhender Pumpenleerlauf auszuschließen ist, auf eine fehlerhafte Kopplung der Magnetkupplung hin.

Der wenigstens eine gemäß vorteilhaften Ausführungsformen eines erfindungsgemäßen Verfahrens erfasste Messwert kann analog mindestens einen jeweils aktuellen Füllzustand im Bewässerungsgefäß und/oder eine Information darüber umfassen, ob das Bewässerungsgefäß jeweils aktuell (korrekt, also in dafür vorgesehener Weise) auf das Sockelelement aufgesetzt ist. Sofern die verwendete Antriebseinheit wie oben erwähnt einen Motor umfasst, kann der mindestens eine Messwert entsprechend dem Obigen mindestens einen jeweils aktuellen Motorstrom und/oder mindestens eine jeweils aktuelle Motordrehzahl umfassen.

Gemäß vorteilhaften Ausführungsformen eines erfindungsgemäßen Pflanzenkultivierungssystems mit Regelungseinheit ist diese (beispielsweise mittels eines entsprechenden Rechnerprogramms) dazu eingerichtet, den jeweils mindestens einen erfassten Messwert auszuwerten; ein erfindungsgemäßes Verfahren kann entsprechend ein solches Auswerten umfassen. Das Auswerten kann jeweils beispielsweise ein Verfolgen eines Entwicklungsverlaufs des Messwerts über ein Zeitintervall (beispielsweise seit dem jeweiligen letzten Start der Pumpeinheit), ein Vergleichen mit einem oder mehreren Sollwert/en und/oder ein Berücksichtigen mindestens eines anderen erfassten Messwerts (in entsprechenden Ausführungsformen beispielsweise eines Füllzustandes bei der Auswertung einer erfassten Motordrehzahl) umfassen. Insbesondere kann die Regelungseinheit in entsprechenden Ausführungsformen mit Motor dazu eingerichtet sein zu bestimmen, ob ein jeweils aktueller Motorstrom, eine jeweils aktuelle Motordrehzahl und/oder ein jeweils aktueller Füllstand im Bewässerungsgefäß in einem jeweils dafür vorgesehenen Bereich liegt.

Die Regelungseinheit kann dazu eingerichtet sein, abhängig von einem Auswertungsergebnis bzw. vom jeweils erfassten mindestens einen Messwert (insbesondere wenn der mindestens eine Messwert wie oben beschrieben eine Fehlfunktion - z.B. einer ggf. umfassten Magnetkupplung - indiziert) einen Neuanlauf der Antriebseinheit zu initiieren. Alternativ oder zusätzlich kann die Regelungseinheit dazu eingerichtet sein, eine Rotationsgeschwindigkeit des Motors abhängig vom jeweils erfassten mindestens einen Messwert zu ändern, insbesondere zu erhöhen oder zu drosseln.

Insbesondere kann die Regelungseinheit vorzugsweise dazu eingerichtet sein, speziell bei einem erfassten Füllstand im Bewässerungsgefäß, der unterhalb eines Mindestniveaus liegt, die Pumpeinheit bzw. die Antriebseinheit abzustellen.

Ein erfindungsgemäßes Verfahren kann entsprechend ein Ändern (insbesondere ein Drosseln und/oder ein Erhöhen) einer Aktivität (je nach Ausführungsform beispielsweise einer Rotationsgeschwindigkeit und/oder einer Änderung einer Stromrichtung in einer ggf. umfassten Spule) der Antriebseinheit, ein Initiieren eines Neuanlaufs der Antriebseinheit und/oder ein Abstellen der Pumpeinheit (bzw. deren Antriebseinheit) in Abhängigkeit vom wenigstens einen erfassten Messwert umfassen.

Auf diese Weise kann bei einem fehlgeschlagenen Anlauf oder einer sich mit der Zeit ergebenden Fehlfunktion der Pumpeinheit automatisch eine vorbestimmte Prozedur zur Behebung oder zur Vermeidung weiterer Störungen vorgenommen werden.

Gemäß vorteilhaften Ausführungsformen ist ein erfindungsgemäßes Pflanzenkultivierungssystem dazu eingerichtet, (vorzugsweise automatisch oder teilautomatisch) mindestens ein Hinweissignal zum Informieren eines Anwenders über eine Funktion der Pumpeinheit zu erzeugen. Ein erfindungsgemäßes Verfahren kann analog ein Erzeugen mindestens eines derartigen Hinweissignals umfassen.

Das Erzeugen kann jeweils beispielsweise auf Grundlage einer Aktivität der Antriebseinheit und/oder (in entsprechenden Ausführungsformen) auf Grundlage des mindestens einen (durch die wenigstens eine Sensoreinrichtung) erfassten Messwertes erfolgen.

Es kann regelmäßig zur Funktionsdokumentation stattfinden oder lediglich im Falle eines Erfassens (durch die mindestens eine Sensoreinrichtung) mindestens eines Messwertes, der außerhalb eines vorgegebenen Bereichs liegt. Gemäß vorteilhaften Ausführungsformen wird das mindestens eine Hinweissignal jeweils so erzeugt, dass es eine Fehlfunktion der Pumpeinheit indiziert. Es kann beispielsweise eine Wartungs- und/oder Reparaturempfehlung umfassen.

Insbesondere kann das mindestens eine Hinweissignal auf Grundlage einer Entwicklung einer Aktivität der Antriebseinheit und/oder jeweils erfasster Messwerte in einem vorgegebenen Zeitintervall (z.B. ab einem Anfangszeitpunkt, z.B. der Inbetriebnahme und/oder seit der letzten Wartung) erzeugt werden. Gemäß speziellen Ausführungsbeispielen wird das mindestens eine Hinweissignal auf Grundlage einer Gesamtanzahl von Neuanläufen der Antriebseinheit (ab einem Anfangszeitpunkt, z.B. ab der Inbetriebnahme und/oder seit der letzten Wartung der Pumpeinheit) und/oder einer Häufigkeit von Neuanläufen der Antriebseinheit (Anzahl pro Zeit ab einem Anfangszeitpunkt bzw. in einem vorgesehenen Zeitintervall) erzeugt.

Gemäß vorteilhaften Ausführungsformen umfasst ein erfindungsgemäßes Pflanzenkultivierungssystem ein Anzeigesystem zur visuellen Darstellung des mindestens einen Hinweissignals und/oder ein akustisches Signalsystem zur akustischen Wiedergabe des mindestens einen Hinweissignals (beispielsweise als mindestens ein Alarmton). Alternativ oder zusätzlich kann das Pflanzenkultivierungssystem eine Übertragungseinrichtung zur (kabellosen oder kabelgebundenen) Übermittlung des mindestens einen Hinweissignals an ein externes Datenverarbeitungsgerät (z.B. einen Standrechner oder ein mobiles Endgerät wie insbesondere ein Smartphone) umfassen, das dann vorzugsweise seinerseits ein Anzeige- und/oder akustisches Signalsystem aufweisen kann.

Auf diese Weise kann ein jeweiliger Anwender mittels des Hinweissignals über die Funktion der Pumpeinheit in Kenntnis gesetzt werden. Im Falle einer Fehlfunktion kann er damit geeignete Maßnahmen ergreifen, beispielsweise eine Wartung der Pumpeinheit veranlassen, Wasser im Bewässerungsgefäß nachfüllen und/oder einen fehlerhaften Aufsetzzustand des Bewässerungsgefäßes korrigieren.

Im Folgenden werden bevorzugte Ausführungsbeispiele der Erfindung anhand von Zeichnungen näher erläutert. Es versteht sich, dass einzelne Elemente und Komponenten auch anders kombiniert werden können als dargestellt. Bezugszeichen für einander entsprechende Elemente sind figurenübergreifend verwendet und werden ggf. nicht für jede Figur neu beschrieben.

Es zeigen schematisch:
- Figur 1:: den grundsätzlichen Aufbau einer exemplarischen Ausführungsform eines erfindungsgemäßen Pflanzenkultivierungssystems;
- Figur 2:: die Pumpeinheit des erfindungsgemäßen Pflanzenkultivierungssystems gemäß Figur 1;
- Figure 3:: den Aufbau einer alternativen exemplarischen Ausführungsform eines erfindungsgemäßen Pflanzenkultivierungssystems;
- Figuren 4a, 4b:: die Pumpeinheit des erfindungsgemäßen Pflanzenkultivierungssystems gemäß Figur 3 in zweit Pumpsituationen; und
- Figur 5:: ein Auswertungsprinzip einer Regelungseinheit eines erfindungsgemäßen Pflanzenkultivierungssystems gemäß einem Ausführungsbeispiel.

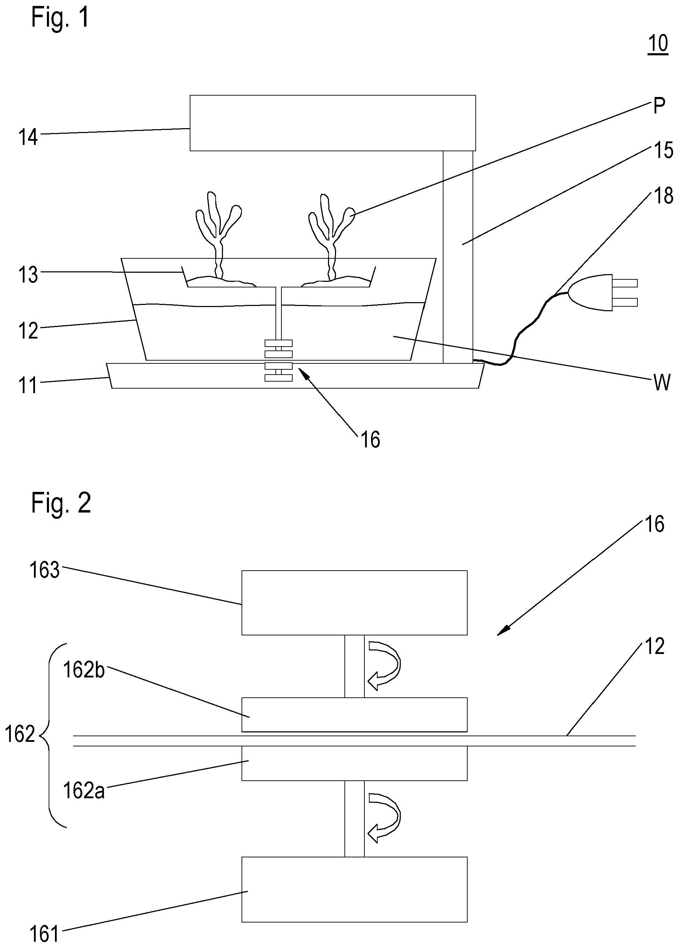

Figur 1 zeigt schematisch den Aufbau eines Pflanzenkultivierungssystems 10 gemäß einem Ausführungsbeispiel für die vorliegende Erfindung. Das Pflanzenkultivierungssystem 10 umfasst ein Sockelelement 11, ein darauf abnehmbar aufgesetztes Bewässerungsgefäß 12 mit Wasser W und eine in das Bewässerungsgefäß 12 eingesetzte Pflanzschale 13, in der vorliegend zwei Pflanzen P wurzeln. Darüber hinaus umfasst das Pflanzenkultivierungssystem eine Lampe 14 zur Beleuchtung der in der Pflanzschale kultivierten Pflanzen P. Die Lampe 14 ist vorliegend mittels eines Ständers 15 mit dem Sockelelement 11 verbunden. Gemäß vorteilhaften Ausführungsformen ist der Ständer als Teleskopstange ausgebildet, so dass also der Abstand der Lampe 14 von der Pflanzschale 13 verstellbar ist.

Zur Energieversorgung weist das Pflanzenkultivierungssystem 10 einen Stromanschluss 18 auf. Über diesen können die Lampe 14 sowie eine Pumpeinheit 16 betrieben werden. In entsprechenden Ausführungsformen können zudem insbesondere eine Regelungseinheit für den Motor der Pumpeinheit, ggf. umfasste Sensoreinrichtungen und/oder Mittel zum Erzeugen, Anzeigen, Hörbarmachen und/oder Übermitteln eines Hinweissignals mittels des Stromanschlusses 15 mit Energie versorgt werden (in der Figur 1 jeweils nicht dargestellt).

Aufbau und Funktionsweise der Pumpeinheit 16 werden anhand der Figur 2 erläutert, die eine schematische Darstellung der Pumpeinheit 16 zeigt, mit der (ggf. mit beispielsweise Nährstoffen und/oder Sauerstoff angereichertes) Wasser vom Bewässerungsgefäß 11 in die Pflanzschale 12 gepumpt werden kann:
Die Pumpeinheit 16 umfasst eine Antriebseinheit 161 vorliegend in Form eines (vorzugsweise elektrisch zu betreibenden) Motors 161, der mindestens teilweise im oder am Sockelelement 11 angeordnet und dazu eingerichtet ist, ein Pumpelement in Form eines Pumpenrades 163 im Bewässerungsgefäß mittels Magnetkraft zur Rotation anzutreiben. Dazu sind der Motor 161 und das Pumpenrad 163 mittels einer Magnetkupplung 162 miteinander verbunden. Die Magnetkupplung 162 umfasst ein antriebsseitiges Kupplungselement 162a und ein abtriebsseitiges Kupplungselement 162b, die im vorliegenden Fall durch den Boden des Bewässerungsgefäßes 12 sowie einen Luftspalt voneinander getrennt sind. Auf diese Weise entfällt die Notwendigkeit von dynamischen Dichtungen in der Kupplung, und da der Motor 161 vom Bewässerungsgefäß 12 gelöst werden kann, müssen bei einem Abnehmen bzw. einem Aufsetzen des Bewässerungsgefäßes 12 von dem/ auf das Sockelelement 11 keine elektrischen Verbindungen gelöst bzw. hergestellt werden. Die Handhabung des Pflanzenkultivierungssystems ist daher besonders bequem.

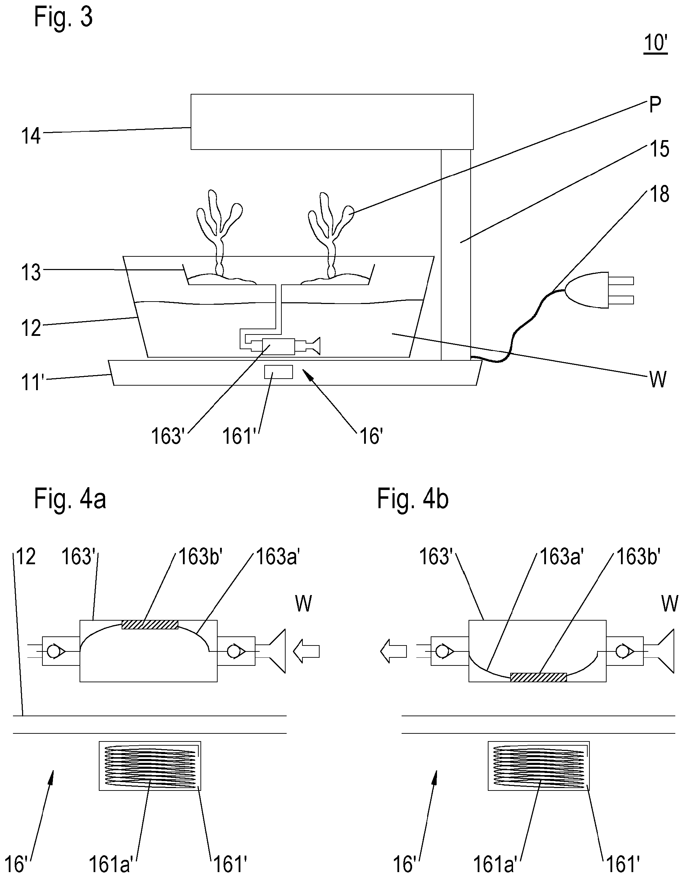

Die Figur 3 zeigt schematisch ein alternatives Ausführungsbeispiel eines erfindungsgemäßen Pflanzenkultivierungssystems 10`. Dessen Bewässerungsgefäß 12' enthält das Pumpelement 163` einer Pumpeinheit 16`, die darüber hinaus ein Antriebseinheit 161' zum Antreiben des Pumpelements 163` umfasst: die Antriebseinheit 161' ist dabei außerhalb und separat vom Bewässerungsgefäß 12' angeordnet, nämlich vorliegend in oder an dem Sockelelement 11', und mittels des Stromanschlusses 18 mit einer Stromquelle zu verbinden (nicht dargestellt).

In den Figuren 4a und 4b ist die Pumpeinheit 16' des in der Figur 3 gezeigten erfindungsgemäßen Pflanzenkultivierungssystems 10' genauer und in zwei voneinander verschiedenen Pumpsituationen dargestellt. Wie aus den Figuren 4a und 4b ersichtlich ist, umfasst das Pumpelement 163`eine Pumpmembran 163a' mit einem daran befestigten Magneten 163b`. Die Antriebseinheit 161' umfasst eine schematisch dargestellte, an eine Stromkreis anzuschließende und damit als Elektromotor wirkende Spule 161a`, mittels deren der Magnet 163b` je nach Stromrichtung abgestoßen oder angezogen werden kann: In der in der Figur 4a dargestellten Saugphase wird der Magnet 163` von der Spule 161a' abgestoßen, was - wie durch einen Pfeil dargestellt - ein Eindringen von Wasser W durch einen Eingang in ein Gehäuse des Pumpelements 163` zur Folge hat.

In der in Figur 4b gezeigten Pumpphase hingegen wird der Magnet 163b` von der Spule 161a' der Antriebseinheit 161' angezogen, wodurch das im Gehäuse befindliche Wasser - wie wiederum durch einen Pfeil angezeigt - in ein Rohrsystem und von dort in die in der Figur 3 gezeigte Pflanzschale gepumpt wird. Rückschlagventile sorgen dabei in bekannter Weise für entsprechende Fluss- bzw. Sperrrichtungen. Die Pumpmembran 163a' als Pumpelement der Pumpeinheit 16' ist somit mittels Magnetkraft kontaktlos durch die Antriebseinheit 161' anzutreiben, von der das Pumpelement durch den Boden des Bewässerungsgefäßes 12' sowie vorliegend einen Luftspalt getrennt ist.

Insbesondere enthalten bei den in den Figuren 1 und 2 dargestellten Pflanzenkultivierungssystemen 10, 10` weder das Bewässerungsgefäß 12, 12' noch das Sockelelement 11, 11' offene elektrische Kontakte, was eine Reinigung erleichtert und die Sicherheit des Pflanzenkultivierungssystems erhöht. Darüber hinaus müssen für Aufsetzen des Bewässerungsgefäßes 12, 12' auf das jeweilige Sockelelement 11, 11' keine elektrischen Steckverbindungen hergestellt oder für ein Abnehmen gelöst werden. Auch müssen für eine Reinigung des Bewässerungsgefäßes 12, 12' beispielsweise in einer Spülmaschine keine darin angeordneten Komponenten der Pumpeinheit erst entfernt werden; elektronische Elemente im Wasserlauf werden nicht benötigt. Auf diese Weise wird eine besonders bequeme Handhabung des Pflanzenkultivierungssystems ermöglicht. Zudem werden keine großen energiedurchflossenen Leiterschleifen gebildet, was eine vorteilhafte elektromagnetische Verträglichkeit impliziert.

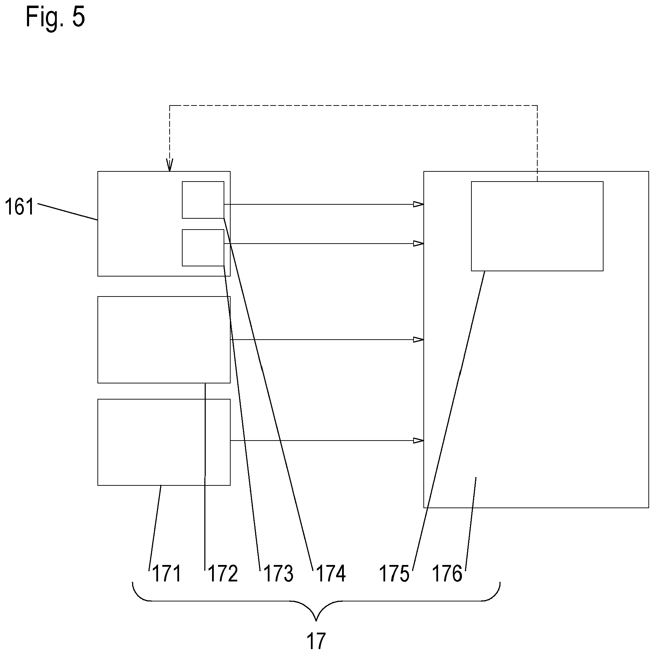

Die Figur 5 zeigt für eine Ausführungsvariante eines erfindungsgemäßen Pflanzenkultivierungssystems, die einen Motor umfasst, eine Funktionsweise einer vorzugsweise umfassten Regelungseinheit 17: Diese umfasst als Sensoreinrichtungen einen Motorstromsensor 173 und einen Drehzahlmesser 174 zum Messen eines jeweils aktuellen Motorstroms bzw. einer jeweils aktuellen Drehzahl des Motors 161 der wenigstens einen Pumpeinheit eines erfindungsgemäßen Pflanzenkultivierungssystems. Als weitere Sensoreinrichtungen umfasst die Regelungseinheit 17 im gezeigten Beispiel einen Füllzustandssensor 171 zum Erfassen eines jeweils aktuellen Befüllungszustandes im Bewässerungsgefäß sowie einen Aufsetzzustandssensor 172, der erfasst, ob das Bewässerungsgefäß (korrekt) auf das Sockelelement aufgesetzt ist.

Die jeweils erfassten Werte der Sensoreinrichtungen werden, wie in der Figur 5 durch Pfeile dargestellt, (drahtlos und/oder kabelgebunden) an eine Auswertungselektronik 176 der Regelungseinheit 17 übermittelt, die die Werte mittels eines geeigneten Rechnerprogramms auswertet, beispielsweise ermitteln kann, ob die Werte in jeweils dafür vorgesehenen Bereichen liegen. Auf Grundlage der Auswertung steuert eine Motoransteuerung 175 den Motor 161; dies ist in der Figur durch einen gestrichelten Pfeil angezeigt. Insbesondere kann die Motoransteuerung dabei die Rotationsgeschwindigkeit des Motors ändern (sie beispielsweise reduzieren, wenn ein gemessener Motorstrom unterhalb einer vorgegebenen Schranke liegt) und/oder einen Neuanlauf des Motors initiieren, wenn ein gemessener Motorstrom einem Leerlaufstrom-Niveau entspricht. Es versteht sich, dass in Ausführungsformen, bei denen die Antriebseinheit beispielsweise wie oben erwähnt eine an einen Stromkreis anzuschließende Spule umfasst, eine zugehörige Regelungseinheit entsprechend aufgebaut sein kann; eine zugehörige Steuerungselektronik kann dann beispielsweise dazu eingerichtet sein, den Stromfluss in der Spule auf Grundlage einer Auswertung durch eine Auswertungselektronik einzustellen.

Die Regelungseinheit kann auf diese Weise jeweils beispielsweise Störungen wie fehlgeschlagene Anläufe und/oder Blockaden der Pumpeinheit erkennen und automatisch geeignet darauf reagieren. Gemäß vorteilhaften Ausführungsformen ist ein erfindungsgemäßes Pflanzenkultiviersystem zudem dazu eingerichtet, einen Verlauf erfasster Messwerte und/oder eine Abfolge eingeleiteter Neuanläufe zu protokollieren und/oder zu dokumentieren (nicht dargestellt).

Insbesondere kann das Pflanzenkultiviersystem dazu eingerichtet sein, auf Grundlage erfasster Messwerte bzw. eines erfassten Verlaufs ein Hinweissignal zu erzeugen, mittels dessen ein Anwender entsprechend über das jeweilige Funktionieren des Pflanzenkultiviersystem und/oder über ggf. empfehlenswerte Aktionen (z.B. eine vorzunehmende Wartung) informiert werden kann (nicht dargestellt). Ein derartiges Hinweissignal kann so erzeugt werden, dass es eine Fehlfunktion der Pumpeinheit indiziert. Es kann auf Grundlage einer Gesamtanzahl und/oder Häufigkeit von Neuanläufen der Antriebseinheit und/oder auf Basis einer in einem vorgegebenen Zeitintervall aufgetretenen Abfolge durch die Sensoreinrichtung erfasster Messwerte erzeugt werden.

Offenbart ist ein Pflanzenkultivierungssystem 10, 10`, das ein Sockelelement 11, 11` sowie ein Bewässerungsgefäß 12, 12' zur Aufnahme von Wasser W und wenigstens einer Pflanzschale 13 umfasst. Das Bewässerungsgefäß 12, 12' ist dabei abnehmbar auf das Sockelelement aufzusetzen. Mittels wenigstens einer Pumpeinheit 16, 16' kann das Wasser W aus dem Bewässerungsgefäß 12, 12' in die wenigstens eine Pflanzschale 13 gepumpt werden. Die Pumpeinheit 16, 16' weist eine Antriebseinheit 161, 161` sowie ein mittels Magnetkraft durch die Antriebseinheit 161, 161' anzutreibendes Pumpelement 163, 163` auf.

Offenbart ist ferner ein Verfahren zum Betreiben eines Pflanzenkultivierungssystems 10, 10`. Dabei wird mittels einer Pumpeinheit 16, 16' Wasser W aus einem Bewässerungsgefäß 12, 12' in mindestens eine Pflanzschale 13 gepumpt. Die Pumpeinheit 16, 16' umfasst eine Antriebseinheit 161, 161' sowie ein mittels einer Magnetkraft durch die Antriebseinheit 161, 161' anzutreibendes Pumpelement 163, 163`.

Der Schutzumfang der vorliegenden Erfindung wird durch die angefügten Ansprüche definiert.

### Bezugszeichen

- 10, 10`: Pflanzenkultivierungssystem
- 11, 11': Sockelelement
- 12: Bewässerungsgefäß
- 13: Pflanzschale
- 14: Lampe
- 15: Stange
- 16, 16`: Pumpeinheit
- 17: Regelungseinheit
- 18: Elektroanschluss

- 161: Antriebseinheit mit Motor
- 161': Antriebseinheit mit Spule
- 161a': Spule
- 162: Magnetkupplung
- 162a: antriebsseitiges Kupplungselement
- 162b: abtriebsseitiges Kupplungselement
- 163: Pumpenelement mit Pumpenrad
- 163`: Pumpenelement mit Pumpmembran
- 163a`: Pumpmembran
- 163b`: Magnet

- 171: Füllzustandssensor
- 172: Aufsetzzustandssensor
- 173: Motorstromsensor
- 174: Drehzahlmesser
- 175: Motoransteuerung
- 176: Auswertungselektronik

- P: Pflanze
- W: Wasser

## Patentansprüche

1. Pflanzenkultivierungssystem (10`) zur Pflanzenkultivierung, das umfasst:
- ein Sockelelement (11'),
- ein Bewässerungsgefäß (12) zur Aufnahme von Wasser (W) und mindestens einer Pflanzschale (13), wobei das Bewässerungsgefäß (12) abnehmbar auf dem Sockelelement (11`) angeordnet oder anzuordnen ist, und
- wenigstens eine Pumpeinheit (16`), die ein Pumpelement (163') zum Pumpen von Wasser aus dem Bewässerungsgefäß (12) in die wenigstens eine Pflanzschale (13) sowie eine Antriebseinheit (161') für das Pumpelement (163`) umfasst,
wobei das Pumpelement (163') mittels Magnetkraft durch die Antriebseinheit (161') anzutreiben ist, **dadurch gekennzeichnet, dass** die Antriebseinheit (161') mindestens eine an einen Stromkreis anschließbare Spule (161a`) und das Pumpelement (163`) mindestens eine Pumpmembran (163a`) umfasst und/oder die Antriebseinheit mindestens einen bewegbaren Magneten und das Pumpelement (161') mindestens eine Pumpmembran (163a') umfasst, und wobei am Pumpmembran (163a') ein Magnet oder ferromagnetisches Material befestigt ist.

2. Pflanzenkultivierungssystem gemäß Anspruch 1, das zudem
eine Regelungseinheit (17) mit mindestens einer Sensoreinrichtung (171, 172, 173, 174) umfasst, wobei die Regelungseinheit (17) dazu eingerichtet ist, eine Aktivität der Antriebseinheit (161') auf Grundlage wenigstens eines durch die Sensoreinrichtung erfassten Messwertes zu regeln.

3. Pflanzenkultivierungssystem gemäß Anspruch 2, wobei die Sensoreinrichtung
- mindestens einen Füllzustandssensor (171) zur Erkennung eines jeweils aktuellen Befüllungszustands im Bewässerungsgefäß und/oder
- mindestens einen Einsetzzustandssensor (172) zur Erkennung, ob das Bewässerungsgefäß (12) bestimmungsgemäß auf das Sockelelement (11') auf gesetzt ist, umfasst.

4. Pflanzenkultivierungssystem gemäß einem der Ansprüche 2 oder 3, wobei die Regelungseinheit (17) dazu eingerichtet ist, abhängig vom wenigstens einen jeweils erfassten Messwert
- eine Antriebsgeschwindigkeit der Antriebseinheit (161') zu ändern
und/oder
- einen Neuanlauf der Antriebseinheit (161') zu initiieren.

5. Pflanzenkultivierungssystem gemäß einem der vorhergehenden Ansprüche, das dazu eingerichtet ist, mindestens ein Hinweissignal zum Informieren eines Anwenders über eine Funktion der Pumpeinheit (16`) zu erzeugen.

6. Pflanzenkultivierungssystem gemäß Anspruch 5, das ein Anzeigesystem zur visuellen Darstellung des mindestens einen Hinweissignals, ein akustisches Signalsystem zur akustischen Wiedergabe des mindestens einen Hinweissignals und/oder eine Übertragungseinrichtung zur Übermittlung des mindestens einen Hinweissignals an ein externes Datenverarbeitungsgerät umfasst.

7. Verfahren zum Betreiben eines Pflanzenkultivierungssystems (10'), wobei das Verfahren ein Pumpen von Wasser (W) aus einem Bewässerungsgefäß (12') in mindestens eine Pflanzschale (13) mittels einer Pumpeinheit (16') umfasst,
die eine Antriebseinheit (161') sowie ein mittels Magnetkraft durch die Antriebseinheit (161') anzutreibendes Pumpelement (163`) aufweist **dadurch gekennzeichnet, dass** die Antriebseinheit (161') mindestens eine an einen Stromkreis anschließbare Spule (161a') und das Pumpelement (163') mindestens eine Pumpmembran (163a') umfasst und/oder die Antriebseinheit (161') mindestens einen bewegbaren Magneten und das Pumpelement (161') mindestens eine Pumpmembran (163a') umfasst, und wobei am Pumpmembran (163a') ein Magnet oder ferromagnetisches Material befestigt ist.

8. Verfahren gemäß Anspruch 7, das zudem ein Erfassen wenigstens eines Messwertes mittels wenigstens einer Sensoreinrichtung (171, 172, 173, 174) sowie ein Regeln einer Aktivität der Antriebseinheit (161 ') auf Grundlage des wenigstens einen erfassten Messwertes umfasst.

9. Verfahren gemäß Anspruch 8, wobei der wenigstens eine Messwert umfasst:
- mindestens einen jeweils aktuellen Füllzustand im Bewässerungsgefäß (12') und/oder
- ob das Bewässerungsgefäß (12') jeweils aktuell korrekt auf ein Sockelelement (11') des Pflanzenkultivierungssystems (10`) aufgesetzt ist.

## Claims

1. Plant cultivation system (10') for plant cultivation, which comprises:
- a base element (11'),
- an irrigation vessel (12) for receiving water (W) and at least one plant tray (13), wherein the irrigation vessel (12) is arranged or can be arranged removably on the base element (11'), and
- at least one pump unit (16') which comprises a pump element (163') for pumping water out of the irrigation vessel (12) into the at least one plant tray (13), and which comprises a drive unit (161') for the pump element (163'),
wherein the pump element (163') can be driven by the drive unit (161') by means of magnetic force, **characterized in that** the drive unit (161') comprises at least one coil (161a') which can be connected to a power circuit and the pump element (163') comprises at least one pump membrane (163a') and/or the drive unit comprises at least one movable magnet and the pump element (161') comprises at least one pump membrane (163a'), and wherein a magnet or ferromagnetic material is fastened to the pump membrane (163a').

2. Plant cultivation system according to claim 1, which additionally comprises a regulating unit (17) comprising at least one sensor facility (171, 172, 173, 174), wherein the regulating unit (17) is designed to regulate an activity of the drive unit (161') on the basis of at least one measured value detected by the sensor facility.

3. Plant cultivation system according to claim 2, wherein the sensor facility comprises
- at least one filling level sensor (171) for identifying a respectively prevailing filling level in the irrigation vessel and/or
- at least one position status sensor (172) for identifying whether the irrigation vessel (12) is positioned as intended on the base element (1 1').

4. Plant cultivation system according to one of claims 2 or 3, wherein the regulating unit (17) is designed
- to change a drive speed of the drive unit (161')
and/or
to initiate a restart of the drive unit (161') as a function of at least one respectively detected measured value.

5. Plant cultivation system according to one of the preceding claims, which is designed to generate at least one warning signal for informing a user about a function of the pump unit (16').

6. Plant cultivation system according to claim 5, which comprises a display system for the visual representation of the at least one warning signal, an acoustic signal system for the acoustic reproduction of the at least one warning signal and/or a transmission facility for the transmission of the at least one warning signal to an external data processing device.

7. Method for operating a plant cultivation system (10'), wherein the method comprises pumping water (W) out of an irrigation vessel (12') into at least one plant tray (13) by means of a pump unit (16') which comprises a drive unit (161') and a pump element (163') which can be driven by the drive unit (161') by means of magnetic force,
**characterized in that** the drive unit (161') comprises at least one coil (161a') which can be connected to a power circuit and the pump element (163') comprises at least one pump membrane (163a') and/or the drive unit (161') comprises at least one movable magnet and the pump element (161') comprises at least one pump membrane (163a'), and wherein a magnet or ferromagnetic material is fastened to the pump membrane (163a').

8. Method according to claim 7, which also comprises a detection of at least one measured value by means of at least one sensor facility (171, 172, 173, 174) and a regulation of an activity of the drive unit (161') on the basis of the at least one detected measured value.

9. Method according to claim 8, wherein the at least one measured value comprises
- at least one respectively prevailing filling level in the irrigation vessel (12') and/or
- whether the irrigation vessel (12') is at present respectively positioned correctly on a base element (11') of the plant cultivation system (10').

## Revendications

1. Système de culture de plantes (10') pour la culture de plantes, comprenant :
- un élément de socle (11'),
- un récipient d'irrigation (12) permettant de contenir de l'eau (W) et au moins un bac à plantes (13), dans lequel le récipient d'irrigation (12) est agencé ou associé de manière amovible sur l'élément de socle (11'), et
- au moins une unité de pompe (16') qui comprend un élément de pompe (163') permettant de pomper de l'eau à partir du récipient d'irrigation (12) jusque dans le au moins un bac à plantes (13), ainsi qu'une unité d'entraînement (161') pour l'élément de pompage (163'),
dans lequel l'élément de pompe (163') peut être entraîné par l'unité d'entraînement (161') au moyen d'une force magnétique, **caractérisé en ce que** l'unité d'entraînement (161') comprend au moins une bobine (161a') pouvant être connectée à un circuit électrique et l'élément de pompe (163') comprend au moins une membrane de pompe (163a') et/ou l'unité d'entraînement comprend au moins un aimant mobile et l'élément de pompe (161') comprend au moins une membrane de pompe (163a'), et dans lequel un aimant ou un matériau ferromagnétique est fixé à la membrane de pompe (163a').

2. Système de culture de plantes selon la revendication 1, qui comprend en outre une unité de régulation (17) avec au moins un dispositif de capteur (171, 172, 173, 174), dans lequel l'unité de régulation (17) est conçue afin de réguler une activité de l'unité d'entraînement (161') sur la base d'au moins une valeur de mesure détectée par le dispositif de capteur.

3. Système de culture de plantes selon la revendication 2, dans lequel le dispositif de capteur comprend :
- au moins un capteur d'état de remplissage (171) permettant de détecter un état de remplissage actuel dans le récipient d'irrigation et/ou
- au moins un capteur d'état d'insertion (172) permettant de détecter si le récipient d'irrigation (12) est correctement placé sur l'élément de socle (11').

4. Système de culture de plantes selon l'une quelconque des revendications 2 ou 3, dans lequel l'unité de régulation (17) est conçue afin de, en fonction d'au moins une valeur de mesure enregistrée respective :
- modifier une vitesse d'entraînement de l'unité d'entraînement (161'), et/ou
- initier un redémarrage de l'unité d'entraînement (161').

5. Système de culture de plantes selon l'une quelconque des revendications précédentes, qui est conçu afin de générer au moins un signal d'avertissement permettant d'informer un utilisateur sur une fonction de l'unité de pompe (16').

6. Système de culture de plantes selon la revendication 5, qui comprend un système d'affichage permettant de montrer visuellement le au moins un signal d'avertissement, un système de signalisation acoustique pour la reproduction acoustique du au moins un signal d'avertissement et/ou un dispositif de transmission pour la transmission du au moins un signal d'avertissement à un appareil de traitement de données externe.

7. Procédé permettant de faire fonctionner un système de culture de plantes (10'), dans lequel le procédé comprend un pompage d'eau (W) à partir d'un récipient d'irrigation (12') jusque dans au moins un bac à plantes (13) au moyen d'une unité de pompe (16'), qui présente une unité d'entraînement (161') ainsi qu'un élément de pompe (163') qui peut être entrainé au moyen d'un force magnétique par l'unité d'entraînement (161'), **caractérisée en ce que** l'unité d'entraînement (161') comprend au moins une bobine (161a') pouvant être raccordée à un circuit électrique et l'élément de pompe (163') comprend au moins une membrane de pompe (163a') et/ou l'unité d'entraînement (161') comprend au moins un aimant mobile et l'élément de pompe (161') comprend au moins une membrane de pompe (163a'), et dans lequel un aimant ou un matériau ferromagnétique est fixé à la membrane de pompe (163a').

8. Procédé selon la revendication 7, comprenant en outre la détection d'au moins une valeur de mesure au moyen d'au moins un dispositif de capteur (171, 172, 173, 174) et une régulation d'une activité de l'unité d'entraînement (161') sur la base de la au moins une valeur de mesure détectée.

9. Procédé selon la revendication 8, dans lequel la au moins une valeur de mesure comprend :
- au moins un état de remplissage actuel respectif dans le récipient d'irrigation (12'), et/ou
- si le récipient d'irrigation (12') est actuellement correctement placé sur un élément de socle (11') du système de culture de plantes (10').
